# FASCICULE DE BREVET EUROPEEN

(11) **EP 0 487 416 B1**
(45) Date de publication et mention de la délivrance du brevet: **06.11.1996**
(21) Numéro de dépôt: 91403131.5
(22) Date de dépôt: 20.11.1991
(51) Int. Cl.: H04Q 11/04

(54) **Agencement de raccordement d'un terminal analogique à un réseau numérique à intégration de services et adaptateur pour un tel agencement**
Verbindungsanordnung eines analogen Endgerätes für ein Dienstintegrierendes Digitalnetz und Adapter für eine solche Anordnung
Analogue terminal connection arrangement for an integrated services digital network and an adaptor for such an arrangement

(30) Priorité: 21.11.1990 FR 9014527
(43) Date de publication de la demande: 27.05.1992
(73) Titulaire: ALCATEL BUSINESS SYSTEMS, F-75008 Paris (FR)
(72) Inventeur: Rinie, Hubert, F-67240 Gries (FR); Kleiber, Frédéric, F-67000 Strasbourg (FR); Sulyan, Michel, F-67100 Strasbourg (FR); Toularastel, Christophe, F-67450 Mundolsheim (FR); Millon, Philippe, F-67400 Geispolsheim Gare (FR); Douhet, Gérard, F-67640 Fegersheim (FR)
(74) Mandataire: Weinmiller, Jürgen

(56) Documents cités:
- EP-A- 0 291 307
- NACHRICHTENTECHNISCHE ZEITSCHRIFT, vol. 41, no. 5, août 1988, pages 264-269, Berlin, DE; D. KLEIN: "Die Schnittstellen X und Y im ISDN"
- TELENORMA NACHRICHTEN, no. 92, 1988, pages 28-34, Frankfurt, DE; G. EINFALT: "Fernsprechapparate für ISDN-Hauptanschlüsse"
- REVIEW OF THE ELECTRICAL COMMUNICATION LABORATORIES, vol. 33, no. 2, mars 1985, pages 221-232, Tokyo, JP; I. KAWASHIMA et al.: "Terminal control equipment"

## Description

L'invention concerne un agencement destiné à permettre le raccordement d'un terminal d'usager, prévu pour être connecté à un accès analogique d'installation téléphonique, à un réseau numérique à intégration de services RNIS, ainsi qu'un adaptateur pour un tel agencement.

De manière connue, le Comité Consultatif International Télégraphique et Téléphonique (CCITT) a publié un ensemble de recommandations relatives aux réseaux numériques à intégration de services (RNIS) qui permet de définir un modèle architectural de base pour ces réseaux avec notamment un certain nombre de points de référence correspondants aux frontières communes aux groupements fonctionnels constitutifs de tels réseaux.

En particulier, il est connu que la structure reliant une installation d'usager à un commutateur de rattachement dans le réseau RNIS est susceptible de comporter une suite de un à quatre groupements s'interfaçant au niveau des points de référence tels que ceux respectivement dénommés R, S, U et Z.

Le point de référence U correspond à l'interface de transmission entre un équipement d'extrémité TL situé au niveau du commutateur de rattachement d'une installation d'abonné au réseau RNIS et un équipement dénommé terminaison numérique de réseau TNR qui est situé au niveau de l'installation d'abonné.

Le point de référence T correspond à l'interface, dite d'accès de base, entre une terminaison numérique de réseau TNR et un équipement dénommé terminaison numérique d'abonné TNA ou NT2 qui dans la pratique correspond à une installation d'abonné.

Le point de référence S correspond à l'interface entre une terminaison numérique d'abonné TNA et un terminal d'usager TE de type RNIS ou entre une terminaison numérique d'abonné TNA et un adaptateur référencé AT, lorsque le terminal d'usager desservi est un terminal qui n'a pas été prévu pour être raccordé à un réseau RNIS, par exemple un poste téléphonique analogique existant, un modem ou un terminal à modem incorporé, ou encore un terminal péri-téléphonique tel qu'un répondeur ou un télécopieur.

Le point de référence Z correspond à l'interface d'accès d'un terminal d'usager, non RNIS, initialement destiné à être raccordé à un réseau téléphonique analogique, par l'intermédiaire d'une ligne téléphonique à deux fils où de manière connue se superposent une téléalimentation en courant continu, associée à une signalisation par ouverture et fermeture de boucle, et une transmission bidirectionnelle d'informations correspondant soit à des signaux de parole transmis sous forme analogique, soit à des signaux de données et/ou de signalisation transmis sous forme multifréquence. Le terminal d'usager est alors nécessairement relié au réseau RNIS via un adaptateur AT ou via un agencement incorporant les fonctionnalités d'un tel adaptateur.

Le point de référence R correspond notamment à une interface d'accès qui n'est pas standardisée pour un terminal d'usager, non RNIS. Ceci concerne notamment les terminaux vidéotex analogiques dont l'alimentation en courant continu n'est pas assurée par la ligne qui relie chacun au réseau téléphonique qui le dessert, celle-ci n'assurant que la transmission de signaux de parole, sous forme analogique, et /ou de données, sous forme multifréquence.

Là encore le terminal d'usager est nécessairement relié au réseau RNIS via un adaptateur AT ou via un agencement incorporant les fonctionnalités d'un tel adaptateur.

Des adaptateurs connus s'interfacent d'un côté au niveau d'un point de référence S et de l'autre au niveau d'un point de référence Z, ce qui implique qu'ils soient capables de traiter la signalisation transmise par canal D au niveau S, ils sont donc relativement complexes et par conséquent coûteux.

D'autres adaptateurs connus, qui offrent l'interface R, sont par contre incomplets, en particulier parce qu'ils ne disposent que de la faible énergie susceptible de leur être fournie par un terminal RNIS uniquement téléalimenté auquel ils sont alors raccordés, ce qui ne leur permet pas d'assurer l'alimentation indispensable à un poste analogique.

En particulier, le document intitulé "Die Schnittstellen X und Y im ISDN", publié à BERLIN, DE, par Dieter KLEIN aux pages 264-269 du n°5 du volume 41 de la revue NACHRICHTENTECHNISCHE ZEITSCHRIFT en août 1988, décrit un agencement de raccordement à un réseau numérique à intégration de services RNIS d'au moins un terminal d'usager originellement prévu pour être connecté à un réseau téléphonique de type analogique. Cet agencement comporte un adaptateur se raccordant à un appareillage téléphonique RNIS par au moins une liaison de transmission de signaux de parole sous forme analogique et une liaison de transmission de données numérique en asynchrone.

L'invention propose un agencement de raccordement à un réseau numérique à intégration de services RNIS d'au moins un terminal d'usager, ici dit additionnel, originellement prévu pour être connecté à un réseau téléphonique analogique par l'intermédiaire d'une ligne téléphonique à deux fils, ledit agencement comportant un adaptateur, auquel chaque terminal additionnel est connecté à un niveau de point de référence Z par sa liaison téléphonique à deux fils, et un terminal RNIS auquel l'adaptateur est relié à un niveau de point de référence R par l'intermédiaire d'une liaison associant un lien de transmission composé d'au moins une paire de fils pour la transmission de signaux de parole sous forme analogique et/ou de données sous forme multifréquence et une paire de transmission bidirectionnelle de signalisation numérique série, de type asynchrone. Selon l'invention, l'adaptateur comporte une interface de ligne qui est reliée d'une part à la ligne téléphonique à deux fils, pour la desserte par cette ligne d'au moins un terminal téléphonique analogique additionnel, d'autre part au lien de transmission, ainsi qu'un processeur de gestion qui supervise ladite interface de ligne et qui est relié d'une part à la paire de transmission bidirectionnelle de signalisation et d'autre part au lien de transmission par l'intermédiaire d'un récepteur de signaux multifréquences et d'un commutateur dans l'adaptateur, ce commutateur le mettant alternativement en liaison avec ladite interface de ligne ou avec le terminal RNIS.

L'invention, ses caractéristiques et ses avantages sont précisés dans la description qui suit, en liaison avec les figures répertoriées ci-dessous.

Les figures 1 et 2 présentent deux schémas de principe d'installations d'abonné reliées à un réseau RNIS et dotées d'agencement de raccordement selon l'invention.

La figure 3 présente le schéma synoptique d'un agencement de raccordement selon l'invention.

La figure 4 présente le schéma synoptique d'un adaptateur selon l'invention.

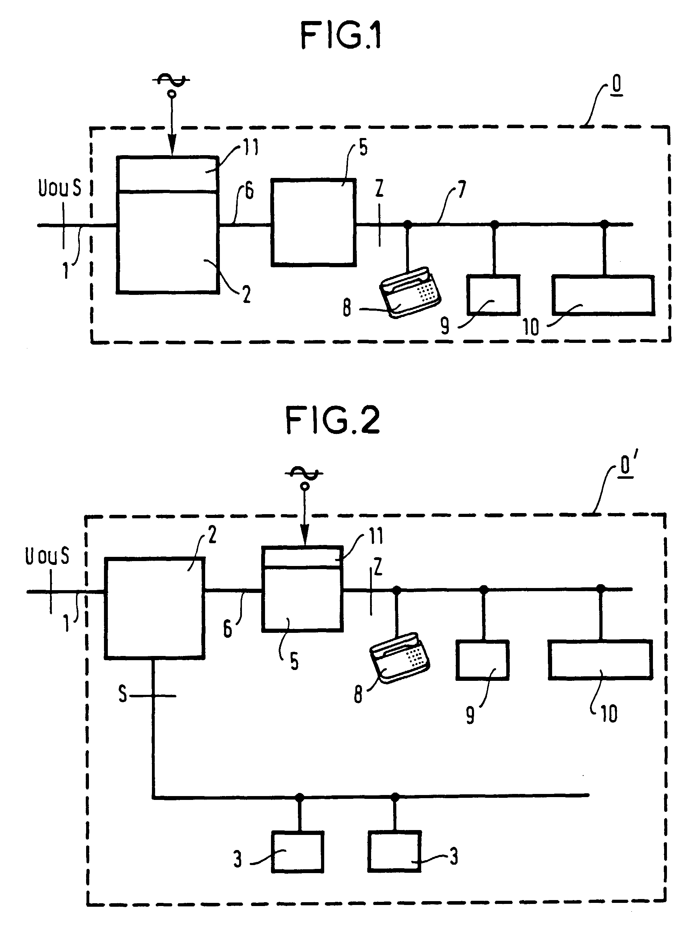

L'installation d'abonné 0 présentée en figure 1 est supposée venir se raccorder à un réseau numérique à intégration de services RNIS, non figuré, qui est éventuellement un réseau privé, dit RPIS, au niveau d'un point de référence prévu à cet effet c'est-à-dire S ou T, classiquement confondus, par une liaison de transmission 1 à deux paires de fils ou encore par une liaison de transmission 1 à une paire de fils. A cet effet cette installation comporte un terminal dédié RNIS 2 qui est relié à la liaison 1 et qui comporte un premier équipement d'interface, non figuré, lui permettant d'accéder au réseau soit au niveau U soit au niveau S, suivant le niveau auquel il vient se raccorder au réseau RNIS, via la liaison 1.

Le premier équipement d'interface comporte classiquement un circuit de transmission lui permettant de transmettre ou de recevoir des données numériques dans les conditions prévues au niveau du point de référence auquel il se raccorde, soit en particulier au débit de 192 kbit/s correspondant à une structure multiplexe associant deux canaux désignés par B ayant chacun un débit utile de 64 kbit/s à un canal désigné par D ayant un débit de 16 kbit/s.

Le débit de chacun des canaux B correspond de manière connue à celui qui est nécessaire à la transmission de signaux de parole codés MIC et il permet aussi la transmission de données numériques pour les usagers. Le canal D transmet essentiellement de la signalisation usager-réseau et accessoirement des données à faible débit ou à apparition sporadique pour les usagers.

Le premier équipement d'interface comporte aussi un contrôleur de communications qui assure le transfert des informations transitant par le canal D soit vers un processeur de gestion du terminal dédié RNIS pour le traitement des signalisations concernant ce terminal soit vers au moins un second équipement d'interface de desserte pour un ou plusieurs terminaux additionnels d'usager.

L'accès des terminaux additionnels est susceptible de s'effectuer à divers niveaux de référence par rapport au réseau RNIS, notamment au niveau d'un point de référence S pour un ou plusieurs terminaux RNIS à accès S, tels que 3, et via un bus, tel que 4, dans ce dernier cas, si le terminal 2 est lui-même raccordé au réseau RNIS au niveau du point de référence U ou éventuellement du point de référence S, - figure 2 -.

L'accès de terminaux additionnels, originellement prévus pour être connecté à un réseau téléphonique analogique, est aussi susceptible de s'effectuer au niveau d'un point de référence R ainsi qu'il est montré en figure 1, éventuellement en combinaison avec la solution évoquée ci-dessus comme le montre la figure 2.

Le terminal dédié RNIS 2, dit alors principal, comporte alors un ou deux équipements d'interface complémentaires de desserte, respectivement dédiées aux terminaux RNIS additionnels et aux terminaux de réseau téléphonique analogique.

L'équipement d'interface dédié aux terminaux téléphoniques analogiques, qui est développé plus loin, est agencé pour permettre le raccordement d'un adaptateur 5 au niveau de point de référence R, soit ici par une liaison 6 comportant au moins trois paires de fils.

L'adaptateur 5 dont la structure est précisée plus loin, est destiné à permettre le raccordement d'un ou de plusieurs terminaux à un niveau de point de référence Z, c'est à dire par l'intermédiaire d'une ligne 7 à une paire de fils, de type téléphonique, où de manière connue se superposent une téléalimentation en courant continu, associée à une signalisation par ouverture et fermeture de boucle, et une transmission bidirectionnelle d'informations correspondant soit à des signaux de parole transmis sous forme analogique, soit à des signaux de données et/ou de signalisation transmis sous forme multifréquence.

Les terminaux téléphoniques analogiques concernés sont par exemple un poste téléphonique analogique 8, un télécopieur 9, un répondeur 10 qui sont alternativement susceptibles d'être connectés à la ligne téléphonique reconstituée que forme la ligne 7.

Dans la mesure où le réseau RNIS n'est pas apte à fournir l'alimentation continue basse tension, classiquement sous une tension de 48 volts nécessitée par les terminaux téléphoniques analogiques,il est prévu d'alimenter en conséquence l'adaptateur 5 via un dispositif d' alimentation 11 en courant continu de tension désirée, reliée à un réseau de distribution d'énergie, ici indépendant du réseau RNIS.

Ce dispositif d'alimentation 11 est associée au niveau du terminal principal 2 dans l'exemple présenté figure 1 et au niveau de l'adaptateur 5 sur la figure 2.

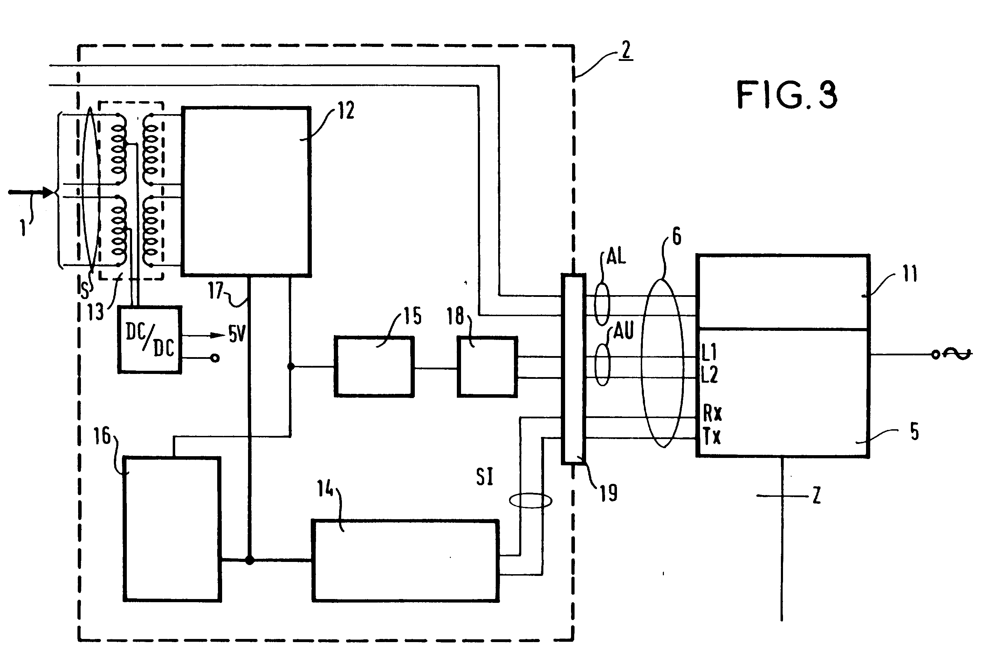

Un exemple d'équipement d'interface de terminal principal 2, permettant de desservir des terminaux téléphoniques analogiques est présenté en figure 3.

Dans l'exemple de réalisation envisagé, cet équipement d'interface met en oeuvre un circuit de transmission numérique bidirectionnelle de données 12 qui se raccorde par un transformateur 13 au niveau d'un point de référence S de réseau RNIS.

Ce raccordement s'effectue pratiquement sur deux paires de fils au secondaire du transformateur 13, le primaire de ce transformateur étant lui-même raccordé par deux paires de fils soit à un accès S de l'installation d'abonné concernée qui dessert le terminal principal 2 considéré.

Le circuit de transmission 12 est relié à un processeur de gestion 14 du terminal principal 2 par un bus 17 pour les échanges de signalisation par l'intermédiaire d'un canal D sur la liaison de transmission 1 desservant le terminal.

Il est aussi relié à un cofidec 15 pour les communications sous forme numérique de ce cofidec, via la liaison 1, et à un agencement de poste numérique 16 qui assure l'ensemble des fonctions audio de poste téléphonique pour le terminal 2 dont seuls les éléments constitutifs concernés par l'invention sont évoqués ici. Cet agencement 16 est supervisé par le processeur de gestion 14 via le bus 17, à cet effet.

Le cofidec 15 est relié à l'adaptateur 5 par un lien référencé AU de transmission d'informations, de type signaux analogiques, ces derniers correspondant soit à des signaux analogiques de parole, soit à des données alphanumériques transmises en code multifréquence.

Le lien AU est inclus dans la liaison 6, il comporte par exemple deux paires de fils reliant directement le cofidec à l'adaptateur.

Dans la réalisation présentée, le lien AU relie l'adaptateur 5 à un circuit de conversion deux fils/quatre fils 18 relié par quatre fils en sortie du cofidec 15 et par deux fils L1, L2 à l'adaptateur, via un connecteur 19 du terminal principal 2.

Ce type de connecteur à lien AU composé de deux fils est prévu par exemple pour le cas où le terminal 2 permet le raccordement direct d'un terminal téléphonique qui est prévu pour être connecté à une ligne téléphonique analogique d'abonné et qui n'exploite pas pour son alimentation les possibilités d'alimentation en courant continu qu'offre ce type de ligne, tel par exemple certains terminaux vidéotex.

Dans la réalisation proposée, le connecteur 19 est également relié au processeur 14 par deux fils RX, TX d'une liaison de signalisation numérique série, de type asynchrone, SI.

Une paire de fils d'alimentation AL permet un transfert d'énergie par l'intermédiaire du connecteur 19 entre le terminal 2 et l'adaptateur 5 dans un sens ou dans l'autre suivant les besoins.

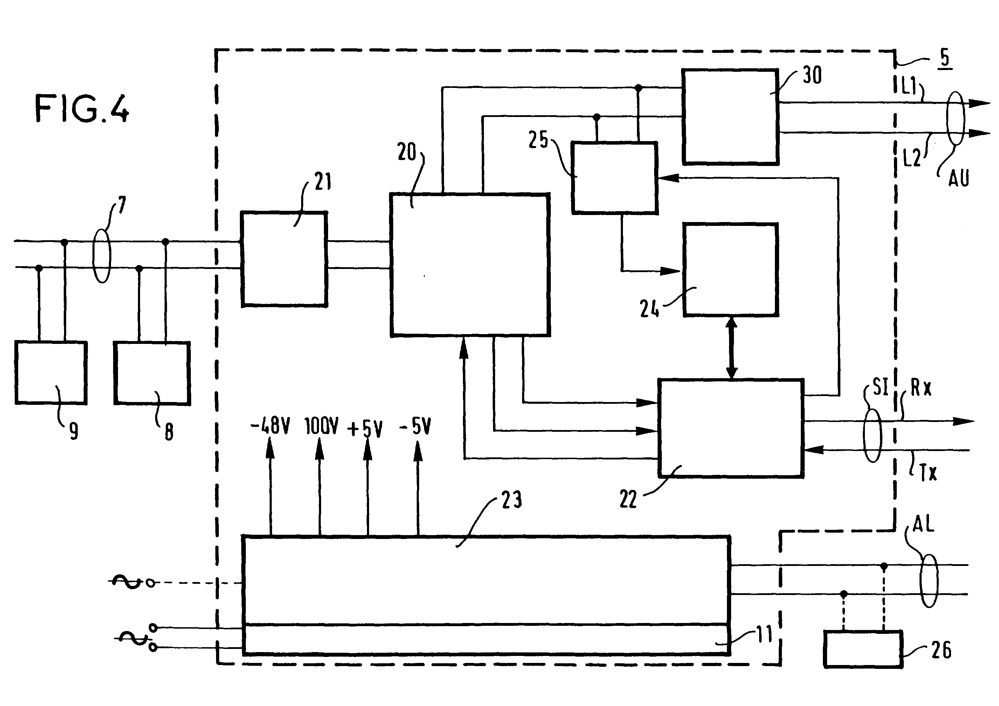

L'adaptateur 5 présenté en figure 4 comporte un circuit interface de ligne 20 relié au lien AU soit directement si celui-ci comporte quatre fils soit par l'intermédiaire d'un circuit de conversion deux fils/ quatre fils 30, si le lien AU n'en comporte que deux, comme sur l'exemple présenté.

Le circuit interface de ligne 20 assure notamment la gestion du courant de boucle pour le ou les terminaux additionnels tels que le poste téléphonique 8 ou ici le télécopieur 9 desservis par l'adaptateur 5 et reliés à cet effet à ce circuit interface de ligne 20, via une ligne 7 auxquels ce ou ces postes sont raccordés et un usuel dispositif de protection de ligne analogique 21 intercalé.

Le circuit interface de ligne 20 fournit aussi le courant continu de ligne téléphonique analogique pour la ligne 7 et les signaux de sonnerie destinés à être transmis sur cette ligne 7, elle est relié à cet effet à un processeur de gestion 22 de l'adaptateur 5 et à un circuit d'alimentation 23.

Le signal de sonnerie, amplifié par le circuit interface de ligne 20 provient soit du terminal principal 2, via la liaison AU et le circuit de conversion 30, soit du circuit d'alimentation 23 de l'adaptateur 5, lorsque celui-ci tire son énergie d'une source alternative externe. Le processeur 22 est relié à un récepteur de signaux multifréquence 24 qui est apte à se connecter entre l'interface de ligne 20 et le circuit de conversion 30 via un commutateur 25, commandé par le processeur 22 .

Le processeur 22 assure l'analyse de la numérotation éventuellement sous forme décimale qui est susceptible d'être émise par un terminal 8, 9 sur la ligne 7 et de la numérotation sous forme multifréquence provenant soit au travers du circuit de conversion 30, pour une première position du commutateur 25 soit d'un terminal 8, 9 via la ligne 7 et le circuit interface de ligne 20, pour une seconde position de ce dernier. Il assure aussi la détection des signaux de boucle et de double appel sur la ligne 7, il commande l'envoi de signaux de sonnerie sur cette ligne en association avec le circuit d'interface de ligne 20 avec lequel il est relié à cet effet. Il assure enfin la supervision de la liaison bidirectionnelle série, de type asynchrone qui le relie au processeur de gestion 14 du terminal principal 2, via les fils Rx, Tx, pour leurs échanges de signalisation.

Comme déjà évoqué plus haut, l'adaptateur 5 est relié à une paire de fils d'alimentation AL qui lui permet éventuellement d'être alimenté et d'alimenter les terminaux téléphoniques analogiques 8, 9 qu'il dessert à partir du terminal principal 2 qui comporte alors un agencement d'alimentation 11 approprié.

Le circuit d'alimentation 23 que comporte l'adaptateur 5 fournit alors les tensions d'alimentation des terminaux téléphoniques analogiques 8, 9 que ceux-ci reçoivent habituellement par leur ligne téléphonique de raccordement et la tension d'alimentation des circuits de l'adaptateur 5, à partir de l'énergie que lui-même reçoit via les fils AL, par exemple sous une tension continue d'une valeur de - 48 volts.

Alternativement, l'adaptateur 5 est susceptible de comporter un agencement d'alimentation 11 qui est alors associé au circuit d'alimentation 23 et qui est alimenté par une source d'énergie par exemple alternative et externe, soit le plus souvent un réseau de distribution d'énergie indépendant du réseau RNIS ici considéré.

Dans ce cas de figure , le dispositif d'alimentation fournit le signal de sonnerie susceptible d'être envoyé sur la ligne 7, via le circuit d'interface de ligne 20 et en fonction de la commande de sonnerie du processeur 22.

L'adaptateur 5 est alors éventuellement susceptible d'utiliser la liaison AL pour fournir de l'énergie au terminal principal 2, pour lui-même ou pour d'autres. Une autre solution consiste à alimenter la liaison AL au travers d'un bornier 26 en fonction des besoins du circuit d'alimentation 23 d'un adaptateur 5 et éventuellement d'un terminal principal 2, sans agencement d'alimentation 11.

## Revendications

1. Agencement de raccordement, à un réseau numérique à intégration de services RNIS, d'au moins un terminal d'usager (8, 9, 10), ici dit additionnel, originellement prévu pour être connecté à un réseau téléphonique analogique par l'intermédiaire d'une ligne téléphonique à deux fils (7), comportant un adaptateur (5), auquel chaque terminal additionnel est connecté à un niveau de point de référence Z par sa liaison téléphonique à deux fils, et un terminal RNIS (2) auquel l'adaptateur est relié à un niveau de point de référence R par l'intermédiaire d'une liaison (6) associant un lien de transmission (AU) composé d'au moins une paire pour la transmission de signaux de parole sous forme analogique et/ou de données sous forme multifréquence et une paire de transmission bidirectionnelle (SI) de signalisation numérique série, de type asynchrone, caractérisé en ce que l'adaptateur comporte une interface de ligne (20) qui est reliée d'une part à la ligne téléphonique à deux fils (7), pour la desserte par cette ligne d'au moins un terminal téléphonique analogique additionnel, d'autre part au lien de transmission (AU), ainsi qu'un processeur de gestion (22) qui supervise ladite interface de ligne et qui est relié d'une part à la paire de transmission bidirectionnelle (SI) de signalisation et, d'autre part, au lien de transmission (AU) par l'intermédiaire d'un récepteur de signaux multifréquences (24) et d'un commutateur (25) dans l'adaptateur, ce commutateur le mettant alternativement en liaison avec ladite interface de ligne ou avec le terminal RNIS (2).

2. Agencement, selon la revendication 1, caractérisé en ce que l'adaptateur comporte un circuit d'alimentation (23) fournissant les tensions d'alimentation à l'interface de ligne pour le ou les terminaux téléphoniques analogiques additionnels raccordés à la ligne téléphonique à deux fils (7) ainsi que l'alimentation pour ses propres circuits, à partir d'une source d'énergie extérieure.

3. Agencement, selon la revendication 2, caractérisé en ce que l'adaptateur est relié par une paire de fils d'alimentation en courant continu de la liaison (6) au terminal RNIS dont il dépend, l'un de cet adaptateur et de ce terminal étant alimenté par l'intermédiaire de l'autre.

## Patentansprüche

1. Einrichtung zum Anschluß mindestens eines Benutzerendgeräts (8, 9, 10), das hier zusätzliches Endgerät genannt wird und ursprünglich zum Anschluß an ein analoges Telefonnetz über eine Telefon-Zweidrahtleitung (7) vorgesehen war, an ein Netz vom Typ ISDN, mit einem Adapter (5), an den jedes zusätzliche Endgerät in Höhe des Bezugspunkts Z über seine Zweidraht-Telefonverbindung angeschlossen ist, und einem ISDN-Endgerät (2), an das der Adapter in Höhe des Bezugspunkts R über eine Verbindung (6) angeschlossen ist, die eine Übertragungsverbindung (AU) aus mindestens einem Drahtpaar für die Übertragung von Sprachsignalen in analoger Form und/oder von Daten in Form eines Mehrfrequenzkodes mit einem Drahtpaar zur bidirektionalen Übertragung (SI) der digitalen Signalisierung in Serie und asynchron kombiniert, dadurch gekennzeichnet, daß der Adapter eine Leitungsschnittstelle (20) enthält, die einerseits an die Zweidraht-Telefonleitung (7) für die Bedienung mindestens eines zusätzlichen analogen Telefonendgeräts über diese Leitung und andererseits an die Übertragungsverbindung (AU) angeschlossen ist, und daß der Adapter weiter einen Verwaltungsprozessor (22) enthält, der die Leitungsschnittstelle überwacht und einerseits an das bidirektionale Übertragungsdrahtpaar (SI) für die Signalisierung und andererseits an die Übertragungsverbindung (AU) über einen Mehrfrequenz-Signalempfänger (24) und einen Schalter (25) im Adapter angeschlossen ist, wobei dieser Schalter eine Verbindung entweder mit der Leitungsschnittstelle oder mit dem ISDN-Endgerät (2) herstellt.

2. Einrichtung nach Anspruch 1, dadurch gekennzeichnet, daß der Adapter eine Speiseschaltung (23) enthält, die die Speisespannungen an die Leitungsschnittstelle für das oder die zusätzlich an die Zweidraht-Telefonleitung (7) angeschlossenen analogen Telefonendgeräte sowie die Speisespannung für seine eigenen Schaltungen ausgehend von einer äußeren Energiequelle liefert.

3. Einrichtung nach Anspruch 2, dadurch gekennzeichnet, daß der Adapter über ein Gleichstrom-Speisedrahtpaar der Verbindung (6) an das ISDN-Endgerät angeschlossen ist, von dem er abhängt, wobei der Adapter über das Endgerät oder das Endgerät über den Adapter gespeist wird.

## Claims

1. A connection facility for connecting at least one user terminal (8, 9, 10) to an integrated services digital network [ISDN], said at least one user terminal being referred to as an "additional" terminal herein, and originally being intended to be connected to an analog telephone network via a two-wire telephone line (7), said connection facility including an adapter (5) to which each additional terminal is connected at a Z reference point via its two-wire telephone link, and an ISDN terminal (2) to which the adapter is connected at an R reference point via a link (6) associating a transmission tie (AU) composed of at least one transmission pair for transmitting speech signals in analog form and/or data in multi-frequency form, and at least one both-way transmission pair (SI) for providing asynchronous-type serial digital signalling transmission, said connection facility being characterized in that the adapter includes: a line interface (20) which is connected firstly to the two-wire telephone line (7) for serving at least one additional analog telephone terminal via said line, and secondly to the transmission tie (AU); and a management processor (22) which supervises said line interface and which is connected firstly to the both-way transmission pair (SI) for providing signalling transmission, and secondly to the transmission tie (AU) via a multi-frequency signal receiver (24) and via a switch (25) in the adapter, the switch connecting it alternately to said line interface or to the ISDN terminal (2).

2. A connection facility according to claim 1, characterized in that the adapter includes a power supply circuit (23) delivering both power supply voltages to the line interface for the additional analog telephone terminals connected to the two-wire telephone line (7), and also the power supply for its own circuits, from an external energy source.

3. A connection facility according to claim 2, characterized in that the adapter is connected via a pair of DC power supply wires of the link (6) to the ISDN terminal on which the adapter is dependent, either the adapter being powered via the terminal, or the terminal being powered via the adapter.
